Europäisches Patentamt

European Patent Office

Office européen des brevets

(11) Veröffentlichungsnummer: **0 188 268**
**A2**

(12) **EUROPÄISCHE PATENTANMELDUNG**

(21) Anmeldenummer: 86100397.8

(22) Anmeldetag: 14.01.86

(51) Int. Cl.⁴: **C 01 F 7/14**

(30) Priorität: 17.01.85 DE 3501350
20.12.85 DE 3545284

(43) Veröffentlichungstag der Anmeldung:
23.07.86 Patentblatt 86/30

(84) Benannte Vertragsstaaten:
DE

(71) Anmelder: Alcoa Chemie GmbH
Giulinistrasse 2
D-6700 Ludwigshafen(DE)

(71) Anmelder: KALI + SALZ AG
Friedrich-Ebert-Strasse 160
D-3500 Kassel(DE)

(72) Erfinder: Pohland, Horst, Dr. Dipl.-Chem.
Schwetzinger-Strasse 39
D-6701 Limburgerhof(DE)

(72) Erfinder: Schepers, Bernard, Dr. Dipl.-Chem.
Peter Roseggerweg 6
D-6720 Speyer(DE)

(74) Vertreter: Benatzky, Erika, Dr.
Giulinistrasse 2 Postfach 150480
D-6700 Ludwigshafen/Rh.(DE)

(54) Verfahren zur Herstellung von Aluminiumhydroxid mit niedrigem Gehalt an Verunreinigungen, insbesondere an Eisen, und hohem Weissgrad.

㉗ Es wird ein Verfahren zur Herstellung von Aluminium-hydroxid mit einem niedrigen Gehalt an Verunreinigungen, insbesondere Eisen, aus den nach dem Bayer-Prozeß anfallenden Aluminatlaugen beschrieben, bei dem in diese nach der Rotschlammabtrennung Magnesiumsulfat in Mengen von 0,05 bis 20 g/L und Calciumhydroxid in Mengen 1 bis 10 g/L eingerührt werden.

- 1 -

## Verfahren zur Herstellung von Aluminiumhydroxid mit niedrigem Gehalt an Verunreinigungen, insbesondere an Eisen, und hohem Weißgrad

Gegenstand der vorliegenden Erfindung ist ein Verfahren zur Herstellung eines eisenarmen Aluminiumhydoxids mit hohem Weißgrad durch Zersetzung von Aluminatlauge, die durch den alkalischen Aufschluß von Bauxit (Bayer-Verfahren) oder Aluminiumhydroxid gewonnen wird.

Die im Bauxit enthaltenen Aluminiumverbindungen verschiedener Zusammensetzung werden in wäßriger Alkalilauge bei hohen Temperaturen als Aluminate gelöst. Die unlöslichen Bestandteile des Bauxits bleiben dabei als sogenannter Rotschlamm in der Aluminatlauge suspendiert. Der Rotschlamm wird anschließend durch Dekantierung und Filtration aus der Aluminatlauge abgetrennt, gewaschen und auf Halde gegeben oder einer anderen Verwendung zugeführt.

Zur Abtrennung feinster Rotschlamm-Teilchen wird die gesättigte, ca. 100 Grad C heiße Aluminatlauge einer Klarfiltration in Druckfiltern unterworfen, bei der zur Verbesserung der Filtrierleistung vielfach ein Filterhilfsmittel (Precoat) CaO bzw. $Ca(OH)_2$, Kohlenstaub oder Tonerdehydrat verwendet wird. Nach dieser Filtration, auch Sicherheits-Filtration genannt, enthält die Aluminatlauge neben sehr viel Alkalicarbonat und wechselnder Mengen an Verbindungen des Vanadins, Phosphors, Fluors und Arsens, als Nebenbestandteil Verunreinigungen in Form von Eisenverbindungen. Während sich das Alkalicarbonat und Verunreinigungen des Vanadins, Phosphors, Fluors und Arsens durch Zusatz von z.B. CaO bzw. $Ca(OH)_2$ oder durch spezielle Kristallisationsverfahren unterhalb der Sättigungsgrenze halten lassen, scheidet sich das in der klarfiltrierten Aluminatlauge gelöste oder kolloidal gelöste Eisen zum Teil mit dem auskristallisierenden Aluminiumhydroxid aus und verunreinigt dies nicht unerheblich.

Die chemische Reinheit und der Weißgrad des Aluminiumhydroxids sind von großer Bedeutung für dessen weitere Verwendung.
Aluminiumhydroxid ist das wichtigste Ausgangsprodukt für die Herstellung anorganischer wie organischer Aluminiumverbindungen. Für diese wie auch bei der Verwendung für Katalysatoren und Füllstoffe sind der Eisengehalt und Weißgrad von großer Wichtigkeit. Daneben wird durch thermische Behandlung das Aluminiumhydroxid in Aluminiumoxid umgewandelt, das als Rohstoff für die Herstellung von Aluminiummetall dient. Auch hierbei spielt die chemische Reinheit eine entscheidende Rolle, insbesondere bei einigen Metallspezialitäten.

Es sind daher im Laufe der Zeit eine Reihe von Verfahren entwickelt worden, die eine Erhöhung der Reinheit des Aluminiumhydroxids, insbesondere in bezug auf den Eisengehalt, zum Ziel haben.
So werden beispielsweise Aluminiumhydroxide nach US - PS 3 607 140 durch eine sogenannte Vor-Ausrührung gewonnen. Danach wird aus der gesättigten Klarlauge in der ersten Stufe ca. 5 bis 10 g/l Aluminiumhydroxid, welches sehr eisenreich ist, auskristalli-siert und von der nun $Al_2O_3$-ärmeren, aber reineren Aluminatlauge abgetrennt, aus der dann ein eisenarmes Aluminiumhydroxid auskristallisiert werden kann. Es braucht nicht sonderlich erwähnt zu werden, daß dieses Verfahren technisch aufwendig und verlustreich ist.

Ein anderes, ebenfalls sehr aufwendiges Verfahren wird in der DE-PS 11 72 246 beschrieben, nach dem die Aluminatlauge mit Kaliumpermanganat behandelt und anschließend durch Passieren eines Kalkbettes gereinigt wird. Nach diesem Verfahren können etwa 20% des in der Aufschlußlösung enthaltenen Eisens abgetrennt werden.

01.88268

Andere Verfahren wiederum vermindern den Eisengehalt
der Aluminatlauge, indem sie diese durch ein Bett von
körnigen Materialien, wie Sand oder Monohydrat-Bauxit,
Aktivkohle oder Aktivtonerde, drücken, wie beispielsweise in der US-PS 3 832 442 beschrieben. Die nach
diesem Verfahren zu erzielenden Effekte sind aber
unbefriedigend.

Ein besonderes Problem bei der Aluminiumoxid-Erzeugung
nach dem Bayer-Verfahren ergibt sich bei der Verarbeitung von sonst hochwertigen Hydrargillit-Bauxiten,
die an sich einen sehr niedrigen Eisengehalt haben
können. Gerade bei diesen leicht aufschließbaren
Bauxiten erhält man bei der Zersetzung der daraus
gewonnenen Aluminatlauge häufig Hydroxide mit zu
hohem Eisengehalt. Man ist daher oft gezwungen, einen
solchen Bauxit im Gemisch mit einem eisenreicheren
zu verarbeiten oder sogar den Eisengehalt des Bauxits
durch Zugabe von Eisenpulver oder Roheisen zu erhöhen.

Aufgabe der vorliegenden Erfindung ist es, ein Reinigungsverfahren zu finden, mit dessen Hilfe das gestellte
Problem ohne größeren Aufwand an Zeit und Apparaturen
gelöst werden kann.

Überraschenderweise hat sich nunmehr gezeigt, daß
der Eisengehalt einer von Rotschlamm befreiten Aluminatlauge (Aufschlußlösung) bei der Temperatur von 75 bis
$105^{\circ}C$, insbesondere 90 bis $105^{\circ}C$, mit einem Gemisch
von 1 bis 10 g/L CaO und/oder $Ca(OH)_2$ und 0,05 bis
20g/L Magnesiumsulfat gesenkt werden kann, wenn die
Zusatzstoffe in der Aluminatlauge 15 bis 45 Minuten
gerührt werden, und die Feststoffe anschließend von
der Aluminatlauge abgetrennt werden. Die Abtrennung
der Feststoffe kann beispielsweise durch Dekantation
oder Klarfiltration über einen Druckfilter erfolgen.

Die klarfiltrierte Aluminatlauge wird anschließend in an sich bekannter Weise gekühlt, mit Impfstoff versetzt und zersetzt. Das auskristallisierte Aluminiumhydroxid zeigt schon nach dem ersten Zyklus einen höheren Weißgrad und einen deutlich reduzierten Eisengehalt.

Die Reinheit des Aluminiumhydroxids verbessert sich weiter mit fortschreitender Verminderung des Eisengehaltes im zurückgeführten Impfhydroxid.

Das Magnesiumsulfat kann sowohl wasserfrei als auch ein Hydrat sein, beispielsweise Monohydrat (Kieserit). Die Teilchengröße des Magnesiumsulfates liegt vorteilhafterweise unterhalb 0,1 mm. Besonders wirksam ist ein Magnesiumsulfat, z.B. Kieserit, bei welchem etwa 80 Gew.% eine Teilchengröße zwischen 0,01 und 0,1 mm aufweisen. Selbstverständlich kann die Teilchengröße auch gleich 0,1 mm oder größer als 0,1 mm sein, etwa zwischen 0,1 und 1 mm liegen, jedoch ist die Wirksamkeit derartiger Zusätze geringer, so daß größere Mengen an Magnesiumsulfat eingesetzt werden müssen. Bei Einsatz von Kieserit mit Korngrößen von 0,01 bis 0,1 mm anstelle von Kieserit mit Teilchengrößen von 0,2 bis 0,5 mm kann die Kieseritmenge bis auf die Hälfte und mehr reduziert werden. Außerdem werden geringere Mengen an Sulfationen als Verunreinigung in den Laugenkreislauf eingebracht. Bei Einsatz von Kieserit mit einer durchschnittlichen Teilchengröße von 0,1 bis 1 mm werden etwa 0,5 bis 20 g/L Kieserit benötigt. Nach einer weiteren vorteilhaften Ausführungsform der vorliegenden Erfindung wird das $CaO$ und/oder $Ca(OH)_2$ in einer Korngröße von 0,5 bis 5 mm eingesetzt. Das $CaO$ bzw. $Ca(OH)_2$ kann teilweise auch durch andere kornige Materialien wie technisches Aluminiumhydroxid, gebrannter Magnesit oder Dolomit, Aluminiumoxid und Kohlenstaub ersetzt werden.

Das Verfahren der Erfindung kann ohne wesentliche Änderung der Verfahrensführung des Bayer-Prozesses durchgeführt werden. Die Laugenbehandlung kann kontinuierlich, aber auch sporadisch durchgeführt werden, da sich die Qualitätsverbesserung des Aluminiumhydroxids schon nach wenigen Tagen der Behandlung einstellt.

Anhand der nachstehenden Beispiele wird der Gegenstand der vorliegenden Erfindung noch näher erläutert.

<u>Beispiel 1:</u>

Eine gesättigte Natriumaluminat-Lösung, hergestellt durch einen alkalischen Aufschluß von australischem Weipa-Bauxit, wurde durch Dekantieren vom Rotschlamm getrennt.

Zu einem Liter dieser heißen ($96^{o}C$) Aluminatlösung wurden 5 g $Ca(OH)_2$ (1 bis 2 mm Körnung) und 15 g Kieserit (0,1 bis 1 mm Körnung) gegeben, 30 Min. bei gleicher Temperatur gerührt und filtriert. Parallel dazu wurde unter gleichen Bedingungen eine entsprechende Menge der Aluminatlauge mit 5 g/L $Ca(OH)_2$ allein versetzt, gerührt und ebenfalls filtriert.

<u>Ergebnis:</u>

| | Vergleichsversuch | Versuch gem Erfindung |
|---|---|---|
| Zusammensetzung der Aluminatlauge | Nur mit $Ca(OH)_2$ beh. Aluminatlauge | Mit Gemisch aus $Ca(OH)_2$ und Kieserit behand. |
| $Na_2O$ g/L | 158,6 | 156,8 |
| $Al_2O_3$ g/L | 140,5 | 142,4 |
| $Na_2CO_3$ /als $Na_2O$) g/L | 13,9 | 10,2 |
| $Fe_2O_3$ mg/L | 7,8 | 3,0 |

- 6 -

Die gewonnenen Aluminatlaugen wurden auf 60°C gekühlt, mit je 1 Liter Impfhydrat-Suspension mit einem Gehalt von 50 g/L Al(OH)$_3$ versetzt und gerührt. Nach erfolgter Impfung wurde die Temperatur der Suspension auf 50 Grad C nach weiteren 5 Stunden Rührzeit auf 42 Grad C gesenkt und bei dieser Temperatur zu Ende gerührt. Nach 50 Rührstunden wurden aus der mit nur mit Ca(OH)$_2$ behandelten Aluminatlauge 125,8 g/l aus der mit Kieserit und Ca(OH)$_2$ behandelten 132,8 g/l Aluminiumhydroxid ausgerührt.

Analyse der ausgerührten Aluminiumhydroxid-Qualitäten nach Beispiel 1

Ergebnis:

| Total | Impfstoff | Vergleichsversuch | Versuch gem. Erfindung |
|---|---|---|---|
| | | Al(OH)$_3$ aus nur nur mit Ca(OH)$_2$ behand. Lauge | Al(OH)$_3$ aus mit Gemisch aus Ca(OH)$_2$ und Kieserit behand. Lauge |
| Menge Al(OH)$_3$ total g/l | 25 | 150,7 | 157,8 |
| Weißgrad (Elrepho 457) in % | 80 | 82 | 88 |
| Fe$_2$O$_3$ % | 0,012 | 0,011 | 0,004 |

Beispiel 2

Herstellung der Aluminatlaugen wie bei Beispiel 1.
Zusatz von 10 g/l $Ca(OH)_2$ und nur 2 g/l Kieserit.

Ergebnis:

| Zusammensetzung d.Aluminatlaugen | Nur mit $Ca(OH)_2$ behan. Aluminatlauge | Mit Gemisch aus $Ca(OH)_2$ und Kieserit |
|---|---|---|
| $Na_2O$ g/l | 156,5 | 162,2 |
| $Al_2O_3$ g/l | 134,9 | 136,6 |
| $Na_2CO_3$ g/l | 13,3 | 9,7 |
| $Fe_2O_3$ mg/l | 6,9 | 3,4 |

Das wie im Beispiel 1 ausgerührte $Al(OH)_3$ zeigte folgende
Analysenwerte:

| | | Vergleichsversuch | Versuch gem. Erfindung |
|---|---|---|---|
| | Impf-stoff | $Al(OH)_3$ aus nur mit $Ca(OH)_2$ behand. Lauge | $Al(OH)_3$ aus mit Gemisch aus $Ca(OH)_2$ und Kieserit behan. Lauge |
| Menge $Al(OH)_3$ total g/l | 25 | 149,0 | 158,3 |
| Weißgrad (Elrepho 457)in % | 80 | 82 | 87 |
| $Fe_2O_3$ % | 0,012 | 0,012 | 0,005 |

## Beispiel 3

Eine gesättigte Natriumaluminatlösung, hergestellt durch einen alkalischen Aufschluß eines Bauxits afrikanischer Provenienz, wurde wie im Beispiel 2 mit einem Gemisch aus $Ca(OH)_2$ und Kieserit behandelt. Anstelle von 2 g/l Kieserit wurden jedoch lediglich 0,2 g Kieserit pro Liter eingesetzt. Außerdem hatten 80 Gew.% der Kieseritteilchen eine Teilchengröße von 0,01 bis 0,1 mm. Der Rest der Teilchen war größer oder kleiner.

Das wie im Beispiel 1 ausgefällte Aluminiumhydroxid hatte einen $Fe_2O_3$ - Gehalt von 0,0087 Gew.% .Wird der Zusatz von Kieserit weggelassen, erhält man ein Aluminiumhydroxid mit einem $Fe_2O_3$ - Gehalt von 0,018 Gew.%. Durch die Behandlung wurde also eine Herabsetzung des $Fe_2O_3$ - Gehaltes um 51,7 Gew.% erzielt. Bei Reduzierung der Kieseritmenge auf den zehnten Teil wird qualitativ die gleiche Wirkung dann erzielt, wenn die Teilchengröße des Kieserits um etwa eine Zehnerpotenz reduziert wird. Abschließend wird noch erwähnt, daß die gleichen Ergebnisse im Betrieb erzielbar sind, wobei die Zugabe kontinuierlich oder chargenweise erfolgen kann.

Patentansprüche

1. Verfahren zur Herstellung von Aluminiumhydroxid
   mit niedrigem Gehalt an Verunreinigungen, insbesondere an Eisen, und hohem Weißgrad aus Aluminatlaugen des basischen Aufschlusses von Bauxit nach
   dem Bayer-Verfahren unter Verwendung von Magnesium-
   Verbindungen, wobei nach Abtrennung der Verunreinigungen die Klarlauge unter Zusatz von Impfkristallen
   auf eine Temperatur von 50 bis 75°C gekühlt und
   bei dieser Temperatur etwa 60 bis 80 Stunden lang
   gerührt wird, worauf das ausgeschiedene Aluminiumhydroxid abgetrennt und das Filtrat in den Bauxitaufschluß zurückgeführt wird, dadurch gekennzeichnet,
   daß nach Abtrennung der Hauptmenge des Rotschlammes
   aus der Aufschlußlösung diese bei einer Temperatur
   von 75 bis 105°C mit einem Gemisch von 1 bis 10 g/L
   CaO bzw. Ca(OH)$_2$ und 0,05 bis 20 g/L  Magnesiumsulfat versetzt und 15 bis 45 Minuten gerührt wird,
   und die Feststoffe anschließend von der Aufschlußlösung abgetrennt werden.

2. Verfahren nach Anspruch 1, dadurch gekennzeichnet,
   daß ein Hydrat des Magnesiumsulfates eingesetzt
   wird, insbesondere das Monohydrat.

3. Verfahren nach den Ansprüchen 1 und 2, dadurch
   gekennzeichnet, daß das Magnesiumsulfat mit einer
   durchschnittlichen Teilchengröße von 0,01 bis
   0,1 mm eingesetzt wird.

4. Verfahren nach den Ansprüchen 1 und 2, dadurch gekennzeichnet, daß das Magnesiumsulfat mit einer durchschnittlichen Teilchengröße von 0,1 bis 1 mm eingesetzt wird.